# EUROPÄISCHE PATENTANMELDUNG

(11) **EP 1 090 865 A1**
(43) Veröffentlichungstag der Anmeldung: **11.04.2001**
(21) Anmeldenummer: 99810917.7
(22) Anmeldetag: 07.10.1999
(51) Int. Cl.: B65H 29/00, B65G 1/04

(54) **Lager für Druckbogenwickel**

(71) Anmelder: GRAPHA-HOLDING AG, 6052 Hergiswil (CH)
(72) Erfinder: Urs, Maag, 4812 Mülethal (CH)

(57) **Zusammenfassung**

Das Lager ist vorgesehen für Druckbogenwickel (5) mit einer Wickelrolle (4), auf der die Druckbogen aufgewickelt und auf einem Wickelbock (3) gelagert werden. Das Lager besitzt ein Regal (2) und wenigstens ein auf einer Geleiseeinrichtung verfahrbares Regalbediengerät (8) zum Ein- und Auslagern der Druckbogenwickel (5). Wenigstens eine Wickelvorrichtung resp. ein Wickelbock (3'') einer Wickelstation (13) ist im Erfassungsbereich des Regalbediengerätes (8) angeordnet. Das Regalbediengerät (8) hat einen direkten Zugriff zur Wickelvorrichtung resp. zum Wickelbock (3'') der Wickelstation (13), was ein schnelles Ein- und Auslagern ermöglicht. Vorzugsweise wird jeweils in einem Wechselspiel ein Wickel (5) gegen eine leere Wickelrolle (4) ausgetauscht.

## Beschreibung

Die Erfindung betrifft ein Lager für Druckbogenwickel mit einer Wickelrolle, auf der die Druckbogen aufgewickelt und auf einem Wickelbock gelagert sind, mit einem Regal und wenigstens einem Regalbediengerät zum Ein- und Auslagern der Druckbogenwickel und mit wenigstens einer Wickelstation.

Ein Lager der genannten Art ist im Stand der Technik aus der CH 667252A der Anmelderin bekannt geworden. Die Wickel sind hier Speicher für Druckbogen und diese sind auf einem Wickelkern mittels eines Wickelbandes aufgewickelt. Die Druckbogen werden in an sich bekannter Weise in einem Schuppenstrom in der Wickelstation auf den Wickelkern aufgewickelt und können von diesem wiederum im Schuppenstrom entnommen werden. Ist ein Wickel gebildet, so wird er von Hand oder mittels motorisch antreibbaren Mitnehmerketten mit dem Bock an einen leeren Lagerplatz gebracht. Vorgesehen ist nach diesem Stand der Technik auch ein Kran, mit dem die Wickel von der Wickelstation zum Lagerplatz gebracht werden können. Mit zwei längs verschiebbaren Wagen können innerhalb des Lagers die Wickel verschoben werden. Soll aus dem Lager ein Wickel für die Weiterbearbeitung der Druckprodukte wieder abgeholt werden, so wird der Wickel von Hand oder beispielsweise mit dem genannten Kran zu einer Abwickelstation gebracht. Zum Stand der Technik wird zudem auf die EP 0 739 838 A der Anmelderin verwiesen, in welcher das Auf- und Abwickeln von Druckprodukten erläutert ist.

Der Erfindung liegt die Aufgabe zugrunde ein Lager der genannten Art zu schaffen, das eine noch einfachere und rationellere Lagerhaltung ermöglicht.

Die Aufgabe ist bei einem erfindungsgemässen Lager dadurch gelöst, dass wenigstens ein Wickelbock bzw. eine Wickelrolle der Wickelstation im Erfassungsbereich des Regalbediengerätes angeordnet ist. Beim erfindungsgemässen Lager wird ein in der Wickelstation gebildeter Wickel an der Wickelrolle erfasst und vorzugsweise ohne Lagerbock zu einer leeren Lagerstelle gebracht. An dieser Lagerstelle steht ein leerer Lagerbock für die Aufnahme eines Wickels bereit. Soll aus dem Lager ein Wickel abgewickelt werden, so wird er wiederum mit dem Regalbediengerät ausgelagert und zur Wickelstation gebracht. Der Lagerbock der Wickelstation ist somit in das Lager integriert. Ein Verschieben der Wickel von Hand, mittels einer Mitnehmerkette oder mittels eines Kranes kann beim erfindungsgemässen Lager vermieden werden. Beim erfindungsgemässen Lager können die Wickel schneller und auf kürzerem Weg ein- und ausgelagert werden.

Ein wesentlicher Vorteil des erfindungsgemässen Lagers wird auch darin gesehen, dass dieses weitgehend automatisch betrieben werden kann. Mit einer geeigneten Steuervorrichtung ist es möglich, alle Wickel und Wickelrollen innerhalb des Lagers optimal zu bewirtschaften. Die Positionen der einzelnen Wickel in der Wickelstation und im Lager können jederzeit erfasst und abgerufen werden. Dies ermöglicht eine optimale Bewirtschaftung. Insbesondere können die Wickel so gelagert werden, dass die Transportwege minimal sind. Das Lager ist platzsparend und ermöglicht kurze Reaktionszeiten bei hoher Sicherheit. Da die Positionen der einzelnen Wickel abrufbar sind, ist eine gute Produktionsübersicht gewährleistet. Durch die erfassbaren Bestandes- und Bewegungsdaten ergibt sich eine hohe Transparenz. Vorteilhaft ist auch, dass die Lagerbökke nicht transportiert werden müssen, sondern lediglich die Wickel mit der Wickelrolle.

Eine besonders günstige Bewirtschaftung ergibt sich dann, wenn gemäss seiner Weiterbildung der Erfindung das Regalbediengerät zwei in Laufrichtung versetzte Greifmittel, vorzugsweise teleskopierbare Arme oder Bühnen aufweist. Mit dem einen Teleskoparm kann ein Druckbogenwickel von einer Wickelstation auf das Regalbediengerät gebracht und mit dem anderen Teleskoparm anschliessend eine leere Wickelrolle an die Wikkelstation abgegeben werden. Damit ist ein Austauschvorgang ähnlich einem Wechselspiel möglich. Mit dem Regalbediengerät kann somit mit dem einen Teleskoparm ein Wickel der Wickelstation entnommen und mit dem anderen Teleskoparm wird eine leere Wickelrolle an die Wickelstation abgegeben. Die Wickelstation ist danach sofort wieder für die Bildung eines neuen Wickels bereit. Dies ergibt besonders kurze Zykluszeiten bei einem Wechsel an den Wickelstationen.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert.

Es zeigen:
- Fig. 1: schematisch eine räumliche Ansicht eines erfindungsgemässen Lagers,
- Fig. 2: schematisch eine Ansicht eines erfindungsgemässen Lagers,
- Fig. 3a und 3b: schematisch die verschiedenen Station der Wickel beim Ein- und Auslagern.

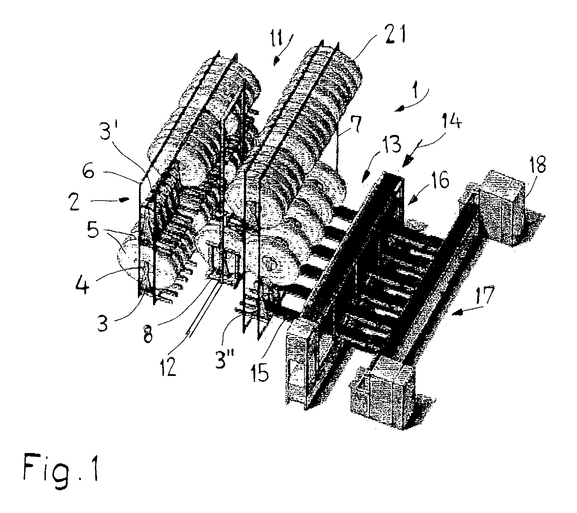

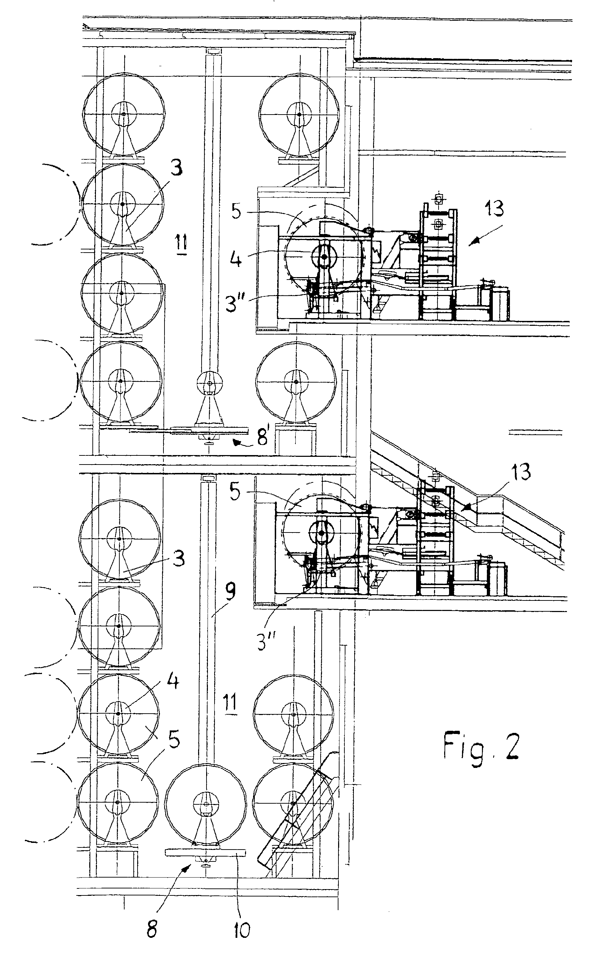

Die Figur 1 zeigt ein erfindungsgemässes Lager 1, das ein Regal 2 mit zwei im Abstand und parallel zueinander angeordneten Gestellen 6 und 7 aufweist. Zwischen den beiden Gestellen 6 und 7 befindet sich ein Regalbediengerät 8, das auf einer Geleiseeinrichtung 12 in einem Gang 11 motorisch verfahrbar ist. Das Regalbediengerät 8 weist gemäss Figur 2 wenigstens eine Hebebühne 10 auf, die an vertikalen Säulen 9 vertikal verfahrbar ist. Die Hebebühne 10 lässt sich somit horizontal sowie vertikal im Gang 11 verfahren.

Im Lagergestell 6 befinden sich mehrere Wickelböcke 3, auf denen Wickel 5 gelagert sind. Diese Wickel 5 sind jeweils auf eine Wickelrolle 4, auch Wickelkern genannt, aufgewickelt. Die Druckprodukte sind in an sich bekannter Weise mittels eines hier nicht gezeigten Wickelbandes in Schuppenformat auf die Wickelrolle 4 aufgewickelt. Die Wickel 5 können jeweils mit dem Wickelkern 4 vom Bock 3 abgehoben werden. Die Figur 1 zeigt im Gestell 6 mehrere Lagerböcke 3', die leere Lagerstellen bilden.

Im Lagergestell 7 sind in einer oberen Reihe 21 ebenfalls mehrere Wickel 5 auf Lagerböcken 3 in einer Reihe gelagert. Auch in dieser Reihe 21 können selbstverständlich mehrere leere Lagerstellen vorhanden sein.

Das Regalbediengerät 8 weist beispielsweise zwei Teleskoparme auf, die sich quer zur Längsrichtung des Ganges 11 erstrecken und die im Abstand zueinander angeordnet sind. Die Teleskoparme können wahlweise und unabhängig voneinander nach rechts oder links ausgefahren werden. Mit diesen Teleskoparmen können die Wickel 5 und Wickelrollen 4 aus den Gestellen 6 und 7 gefasst und auf die Hebebühne 10 oder von dieser in die Gestelle 6 und 7 gebracht werden. Vorzugsweise sind auf der Hebebühne 10 zwei Teleskoparme angeordnet. Denkbar ist jedoch auch eine Ausführung mit lediglich einem Teleskoparm. Die Teleskoparme können auch durch andere geeignete Greifmittel ersetzt sein.

Im unteren Bereich des Lagergestells 7 befinden sich in Reihe mehrere Wickelböcke 3'', vor denen Wickelstationen 13 angeordnet sind. Mit diesen an sich bekannten Wickelstationen 13 können auf den Wickelböcken 3'' Wickel 5 gebildet werden. Die Druckprodukte werden hierbei von einer hier nicht gezeigten Rotation in Richtung des Pfeils 14 zu Fördervorrichtung 16 und 17 gebracht. Über querverlaufende Förderorgane 15 werden die Druckprodukte in an sich bekannter Weise den Wickelrollen 4 zugeführt. An den Wickelstationen 13 können jedoch auch die Druckprodukte für die Auslagerung und Weiterverarbeitung den Wickeln 5 entnommen werden. Die im Schuppenstrom abgewickelten Druckprodukte gelangen über die Förderorgane 15 zu weiteren hier nicht gezeigten Verarbeitungsstationen. Die Wickelböcke 3'' sind im Lagergestell 7 so angeordnet, dass die Wikkelrollen 4 mit dem Regalbediengerät 8 erfassbar sind. Es besteht somit ein direkter Zugriff des Regalbediengerätes 8 auf die Wickelrollen 4 bzw. die Wickel 5 der Wickelstationen 13. Das Regalbediengerät 8 kann somit die Wickel 5 der Wickelstationen 13 einlagern und auch die gelagerten Wickel 5 auslagern und damit an die Wickelvorrichtungen 3'' übergeben. Die ausgelagerten Wickel 5 werden dann von den Wickelmaschinen an den Wickelstationen 13 wieder abgewickelt und einer weiteren Verarbeitung zugeführt. Das Regalbediengerät 8 kann auch leere Wickelrollen 4 ein- und auslagern.

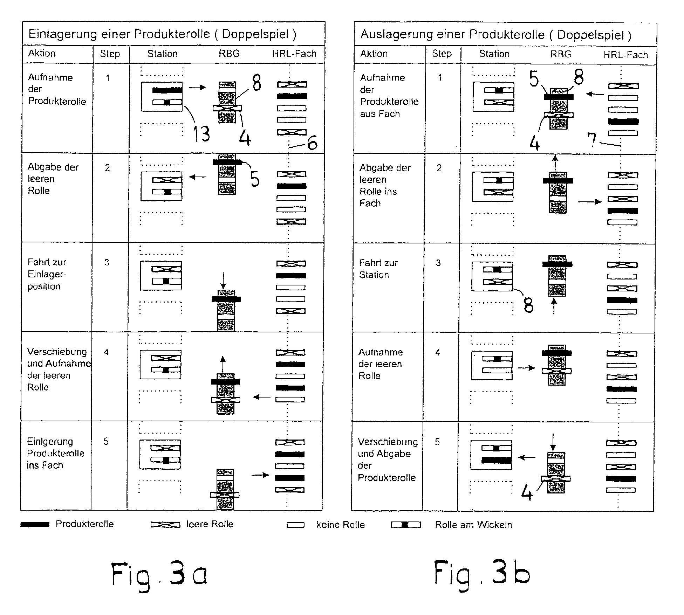

Die Figuren 3a und 3b zeigen einzelne Schritte beim Ein- und Auslagern von Wickeln 5 bzw. Produkterollen. Links ist jeweils die Wickelstation 13 und rechts das Lagergestell 6 angedeutet. Zwischen diesen beiden ist das Regalbediengerät 8 verfahrbar. Die Figur 3a zeigt ganz oben die Aufnahme eines Wickels 5 von der Wickelstation 13 auf das Regalbediengerät 8. Auf dem Regalbediengerät 8 befindet sich eine leere Wikkelrolle 4. Befindet sich der Wickel auf dem Regalbediengerät 8, so wird dieses verschoben und anschliessend die leere Wikkelrolle 4 an die Wickelstation 13 übergeben. Das Regalbediengerät 8 fährt nun zur Einlagerungsposition und nimmt dort eine leere Wickelrolle 4 auf. Anschliessend wird das Regalbediengerät wieder verschoben und der Wickel 5 in das leere Fach eingeschoben. Beim Einlagern findet somit zweimal ein Austausch und somit ein Art Doppelspiel statt.

Die Figur 3b zeigt das Auslagern eines Wickels 5. Im ersten Schritt ganz oben übernimmt das Regalbediengerät 8 eine Rolle 5 aus dem Gestell 7. Anschliessend wird eine leere Wickelrolle 4 dem Lagergestell übergeben. Der Wickel 5 wird darauf einer Wickelstation 13 übergeben und das Regalbediengerät 8 übernimmt von der Wickelstation 13 eine leere Wickelrolle 4. Diese Vorgänge, also das Ein- als auch das Auslagern erfolgt vorzugsweise automatisch. Alle Vorgänge werden mittels einer Leit- und Steuervorrichtung 18 (Figur 1) verfolgt und registriert. Der Lager bestand und die Positionen der Wickel 5 als auch der leeren Wickelrollen 4 ist somit jederzeit abrufbar. Anstelle eines einzigen Regalbediengerätes 8 können gleichzeitig auch mehrere solche Regalbediengeräte 8 vorhanden und tätig sein. Diese können auf gleicher Ebene oder gemäss Figur 2 auf zwei Ebenen übereinander angeordnet sein. Die beiden Regalbediengeräte 8 und 8' gemäss Figur 2 können unabhängig voneinander verfahren werden, wobei gemäss den Figuren 3a und 3b Wickel ein- und ausgelagert werden. Wie die Figur 2 zeigt, können die Positionen der Wickelstationen 13 und somit der Wickelvorrichtungen resp. -böcke 3'' unterschiedlich sein. Wesentlich ist jedoch, dass die Regalbediengeräte 8 und 8' direkten Zugriff zu den Wickelrollen 4 haben.

## Patentansprüche

1. Lager für Druckbogenwickel mit einer Wickelrolle (4), auf der die Druckbogen aufgewikkelt und auf einem Wickelbock (3) gelagert sind, mit einem Regal (2) und wenigstens einem Regalbediengerät (8) zum Ein- und Auslagern der Druckbogenwickel (5) und mit wenigstens einer Wickelstation (13), dadurch gekennzeichnet, dass wenigstens ein Wickelbock (3'') bzw. eine Wickelrolle (4) der Wickelstation (13) im Erfassungsbereich des Regalbediengerätes (8) angeordnet ist.

2. Lager nach Anspruch 1, dadurch gekennzeichnet, dass das Regalbediengerät (8) wenigstens ein Greifmittel aufweist und dass die Wickelrolle (4) mit diesem Greifmittel (19, 20) bedienbar ist.

3. Lager nach Anspruch 2, dadurch gekennzeichnet, dass das Regalbediengerät (8) zwei in Laufrichtung versetzte Greifmittel (19, 20) aufweist, derart, dass mit dem einen Greifmittel (19, 20) ein Druckbogenwickel (5) von der Wickelstation (13) auf das Regalbediengerät (8) bringbar und mit dem anderen Greifmittel (19, 20) eine leere Wickelrolle (4) an die Wickelstation (13) abgebbar ist.

4. Lager nach Anspruch 2 oder 3, dadurch gekennzeichnet, dass wenigstens ein Greifmittel (19, 20) auf beide Seiten des Regalbediengerätes (8) ausfahrbar ist.

5. Lager nach einem der Ansprüche 1 bis 4, dadurch gekennzeichnet, dass die Wickelstation (13) mehrere nebeneinander angeordnete Wikkelvorrichtungen resp. -böcke (3'') aufweist.

6. Lager nach einem der Ansprüche 1 bis 5, dadurch gekennzeichnet, dass wenigstens ein Regalbediengerät (8) in einem Gang (11) des Regals (2) horizontal und vertikal verfahrbar ist.

7. Lager nach einem der Ansprüche 1 bis 6, dadurch gekennzeichnet, dass das Regalbediengerät (8) automatisch verfahrbar ist und automatisch Wickel (5) und leere Wickelrollen (4) ein- und auslagern.

8. Lager nach einem der Ansprüche 1 bis 7, dadurch gekennzeichnet, dass in einer Steuervorrichtung (18) die Positionen der Wickel (5) und der leeren Wickelrollen (4) erfasst und zur Bewirtschaftung verarbeitet werden.

9. Lager nach einem der Ansprüche 1 bis 8, dadurch gekennzeichnet, dass beim Ein- und Auslagern jeweils ein Wickel (5) an seiner Wikkelrolle (4) gefasst und von einem Wickelbock (3) abgehoben oder auf einen solchen aufgesetzt wird.
